# EUROPÄISCHE PATENTANMELDUNG

(11) **EP 3 336 253 A1**
(43) Veröffentlichungstag der Anmeldung: **20.06.2018**
(21) Anmeldenummer: 17001936.8
(22) Anmeldetag: 27.11.2017
(51) Int. Cl.: E01C 19/18, B65G 45/16

(54) **BESCHICKER UND FÖRDERGURTABSTREIFER FÜR EINE STRASSENBAUMASCHINE UND VERFAHREN ZUM ABSTREIFEN EINES FÖRDERGURTES EINER STRASSENBAUMASCHINE**

(30) Priorität: 16.12.2016 DE 102016014983
(71) Anmelder: Dynapac GmbH, 26203 Wardenburg (DE)
(72) Erfinder: Martens, Christoph, 26122 Oldenburg (DE)
(74) Vertreter: Möller, Friedrich

(57) **Zusammenfassung**

Straßendecken werden üblicherweise aus Materialien wie Asphalt hergestellt. Das Material wird dazu von einem Beschicker (10) in einen Vorratsbehälter eines Straßenfertigers geladen. Dazu weist der Beschicker (10) einen Gurtförderer (13) mit einem Fördergurt (21) auf. Eine gewisse Menge des Straßenbaumaterials bleibt an dem Fördergurt (21) kleben, was letztendlich zu einer Beschädigung des Fördergurtes (21) führen kann. Die Erfindung schafft einen Beschicker (10) sowie einen Fördergurtabstreifer (26) und ein Verfahren zum Abstreifen eines Fördergurtes (21) mit dem das Abstreifen des Straßenbaumaterials auf eine einfache und gründliche Art und Weise erfolgt. Dazu ist es vorgesehen, dass ein Abstreifelement einzelne, nebeneinander angeordnete Klingen (29) aufweist, die mit einem Untertrum (24) des Gurtförderers (13) in Kontakt bringbar sind.

## Beschreibung

Die Erfindung betrifft einen Fördergurtabstreifer gemäß dem Oberbegriff des Anspruchs 1. Des Weiteren betrifft die Erfindung einen Beschicker gemäß dem Oberbegriff des Anspruchs 7 sowie ein Verfahren zum Abstreifen von Straßenbaumaterial gemäß dem Oberbegriff des Anspruchs 8.

Oberflächenbeläge bzw. Straßenaufbauten, die beispielsweise begehbar oder befahrbar sind, wie insbesondere Fahrbahnbeläge oder Straßendeckschichten bzw. Straßendecken, werden üblicherweise aus Materialien wie vorzugsweise Asphalt hergestellt. Zum Herstellen der auf einem Untergrund aufgebrachten Materialschicht werden im Allgemeinen Straßenfertiger eingesetzt.

Das Material wird dem Straßenfertiger daher üblicherweise zumindest im Wesentlichen kontinuierlich zugeführt, um einen gleichmäßigen und möglichst ununterbrochenen Materialauftrag zu gewährleisten. Als Puffer für kürzere Lieferunterbrechungen weist der Straßenfertiger im Allgemeinen einen auch als Materialbunker bezeichneten Behälter bzw. Vorratsbehälter auf. Das Material wird dazu üblicherweise von einem Beschicker mithilfe eines Förderers in diesen Vorratsbehälter geladen. Dazu weist der Beschicker einen Gurtförderer auf, der das Material insbesondere das Straßenbaumaterial zum Vorratsbehälter des Straßenfertigers transportiert.

Derartige Gurtförderer weisen üblicherweise mindestens einen Fördergurt auf. Dieser Fördergurt ist als Endlosgurt ausgebildet und wird bei der Herstellung durch Vulkanisieren, Kleben oder dergleichen zusammengefügt. Das auf den Untergrund aufzubringende Straßenbaumaterial wird in einem heißen Zustand verarbeitet. In diesem heißen Zustand verhält sich das Straßenbaumaterial viskos und ist stark adhäsiv. Aufgrund dessen wird nicht das gesamte durch den Gurtförderer des Beschickers transportierte Straßenbaumaterial von einem Abgabepunkt am Ende des Gurtförderers in den nachfolgenden Vorratsbehälter des Straßenfertigers abtransportiert. Eine geringe Menge des Straßenbaumaterials bleibt an dem Fördergurt des Gurtförderers kleben, sodass diese Menge des Straßenbaumaterials auf einem Untertrum des Gurtförderers weiter transportiert wird. Derartige Reste, die auf dem Fördergurt verbleiben, können als "Keim" für weiteres anhaftendes Straßenbaumaterial dienen. Dieses anhaftende, stetig wachsende Straßenbaumaterial an dem Fördergurt führt zu einer Versteifung des Gurtes, was letztendlich in einer Beschädigung oder gar Zerstörung des Gurtförderers resultieren kann. Daher ist es notwendig, das anhaftende Straßenbaumaterial von dem Fördergurt regelmäßig zu entfernen.

Die an dem Gurtförderer anliegende Begrenzungsbleche zur Materialführung oder Gummilippen, welche ein Herausfallen des Materials vermeiden, sind für die Vermeidung von anhaftenden Straßenbaumaterial ungeeignet, da sie aufgrund ihres Materials sowie der mechanischen und thermischen Belastung sehr schnell verschleißen und somit unter hohen Arbeits- und Kostenaufwand regelmäßig erneuert werden müssen.

Es sind Abstreiferklingen bekannt, die sich über die gesamte Breite des Fördergurtes erstrecken und Straßenbaumaterial von selbigen abstreifen. Allerdings bildet sich durch die Art und Weise der Führung des Fördergurtes Wellen im Fördergurt. Die bei dieser Wellenbildung entstehenden Wellentäler können durch die Abstreiferklinge nicht erfasst werden, wodurch Straßenbaumaterial, das sich hier einlagert, nicht entfernt werden kann. Diese Abstreiferklingen können ein Vorspannmechanismus aufweisen, durch den die Klinge mit einer gewissen Federvorspannung gegen das Untertrum gedrückt wird. Allerdings werden diese Vorspannmechanismen durch nicht hitzebeständige Elemente realisiert, die aufgrund der thermischen und mechanischen Belastung schnell zerstört werden, wodurch sich die Vorspannung reduziert. Wenn bei dieser Vorspannung der Abstreiferklinge der Winkel zwischen der Klinge und dem Fördergurt zu spitz wird, erfolgt durch die Klinge ein Andrücken des Straßenbaumaterials an den Fördergurt und gerade kein Abstreifen. Durch eine derartige Abstreiferklinge wird somit das Anhaften von Material nicht verhindert sondern sogar noch verstärkt. Des Weiteren sind die bekannten Abstreiferklingen in Ihrer Geometrie sehr komplex, wodurch eine Reinigung selbiger nur sehr schwer möglich ist.

Der Erfindung liegt die Aufgabe zugrunde, einen Beschicker sowie einen Fördergurtabstreifer und ein Verfahren zum Abstreifen eines Fördergurtes zu schaffen, mit dem das Abstreifen des Straßenbaumaterials auf eine einfache und gründliche Art und Weise erfolgt.

Ein Fördergurtabstreifer zur Lösung dieser Aufgabe weist die Merkmale des Anspruchs 1 auf. Demnach ist es vorgesehen, dass ein Fördergurtabstreifer zum Abstreifen von Straßenbaumaterial von einem Fördergurt eines Gurtförderers einer Straßenbaumaschine, insbesondere eines Beschickers oder einer Straßenfräse ein Abstreifelement aufweist, das an einem Untertrum des Gurtförderers angeordnet ist und sich über die gesamte Breite des Untertrums erstreckt. Dieses Abstreifelement weist einzelne, nebeneinander angeordnete Klingen auf, die mit dem Untertrum des Gurtförderers in Kontakt bringbar sind. Diese Vielzahl von einzelnen Klingen, vorzugsweise zwischen 2 bis 40, insbesondere 20 bis 30, Klingen, sind unabhängig voneinander bewegbar, sodass sich die Vielzahl der Klingen der Form bzw. dem Oberflächenprofil des Untertrums des Gurtförderers anpassen kann. Somit kann das Straßenbaumaterial gleichermaßen aus Wellentälern und aus Wellengipfeln des Gurtförderers bzw. des Untertrums abgestreift werden. Dadurch lässt sich der Fördergurt des Gurtförderers auf eine sehr gründliche Art und Weise von dem anhaftenden Straßenbaumaterial befreien.

Bevorzugt kann es gemäß der Erfindung außerdem vorgesehen sein, dass die einzelnen Klingen, bei denen es sich vorzugsweise um Hartmetallklingen handelt, über jeweils eine Blattfeder an einem gemeinsamen Träger befestigt sind, wobei der Träger relativ zum Gurtförderer lösbar befestigt ist, insbesondere beweglich ist. Durch den gemeinsamen Träger sind die Klingen gleichsam an das Untertrum des Gurtförderers bringbar. Zum Betrieb der Straßenbaumaschine lässt sich der Fördergurtabstreifer bzw. der Träger an dem Gurtförderer bzw. in Fertigungsrichtung betrachtet vor einem Abgabepunkt des Gurtförderers lösbar befestigen. Zu Wartungszwecken oder nachdem der Straßenbauprozess abgeschlossen ist, lässt sich der Träger auf eine einfache Art und Weise von dem Gurtförderer trennen. Dazu ist der Träger in eine Vorrichtung an den Gurtförderer befestigbar bzw. einhängbar. Durch diese lösbare Befestigung des Trägers an den Gurtförderer kann eine besonders einfache Art und Weise gewährleistet werden, den Fördergurt von dem anhaftenden Straßenbaumaterial zu befreien. Dadurch, dass jeder einzelnen Klinge eine einzelne Blattfeder zugeordnet ist, kann jede einzelne Klinge dem Oberflächenprofil des Untertrums folgen. Sollte somit das Untertrum die beschriebene Wellencharakteristik aufweisen, so fügen sich die Klinge aufgrund der Blattfedern automatisch in diese Täler bzw. auf diese Gipfel an. Insbesondere durch die Wahl des Klingenmaterials kann eine lange verschleißfreie Nutzung der Klingen zum Abstreifen von Straßenbaumaterial erreicht werden. Dadurch reduziert sich gleichermaßen die Notwendigkeit die Klingen aufgrund von Verschleißerscheinungen auszutauschen.

Insbesondere kann es außerdem vorgesehen sein, dass die einzelnen Klingen lösbar an jeweils einer Blattfeder befestigt sind und/oder die Blattfedern lösbar an dem gemeinsamen Träger befestigt sind. Dadurch, dass sich die einzelnen Klingen von dem Träger bzw. von den Blattfedern lösen können, muss bei einem verschleißbedingtem Ausfall einzelner Klingen nur eben diese ersetzt werden, ohne dass der gesamte Abstreifer ausgetauscht werden muss. Gleichermaßen lassen sich einzelne defekte Blattfedern auswechseln, ohne dass der gesamte Abstreifer erneuert werden muss. Idealerweise sind der Straßenbaumaschine zwei Fördergurtabstreifer zugeordnet, sodass während ein intakter Abstreifer für das Abstreifen von Material verwendet wird, der jeweils Andere bei einer entsprechenden Beschädigung auf eine schnelle Art und Weise repariert werden kann. Durch dieses einfache und schnelle Auswechseln der Klingen bzw. der Blattfedern lässt sich ein nahezu störungsfreier Einbau des Straßenbaumaterials garantieren.

Des Weiteren kann es vorgesehen sein, dass die einzelnen Klingen 2 bis 10 cm, insbesondere 4 bis 5 cm, vorzugsweise 4,8 cm, breit sind und einen gegenseitigen Abstand von 0 bis 0,5 cm, insbesondere 1 mm, aufweisen und quer zum Gurtförderer ausgerichtet sind. Bei einer typischen Breite des Fördergurtes von 1,40 m ergibt sich somit, dass entlang der gesamten Breite des Fördergurtes 28 Klingen nebeneinander angeordnet sind, die aufgrund Ihrer Beabstandung zueinander unabhängig voneinander in bzw. entgegen der Materialförderrichtung schwenkbar sind. Gleichermaßen ist es jedoch auch denkbar, dass die Klingen bzw. die Blattfedern eine andere Dimensionierung aufweisen und somit eine andere Anzahl von Klingen über die Breite des Fördergurtes angeordnet sind. Durch diese erhöhte Anzahl von Klingen über die gesamte Breite des Fördergurtes lassen sich besonders gut kleinste Unebenheiten in dem Oberflächenprofil des Fördergurtes durch die Klingen nachbilden, sodass ein gründliches Abstreifen des Straßenbaumaterials erfolgen kann.

Des Weiteren kann es als vorteilhafte Weiterbildung der vorliegenden Patentanmeldung angesehen werden, dass durch die Veränderung des Abstandes des Trägers zum Untertrum des Gurtförderers die Federvorspannung der einzelnen Klingen variierbar ist. So nimmt die Federvorspannung der einzelnen Klingen mit Reduzierung des Abstandes zwischen dem Träger und dem Gurtförderer zu. Dabei ist der Träger bzw. der Fördergurtabstreifer während des Betriebs des Gurtförderers an selbigen heranzubewegen, damit die einzelnen Klingen bzw. die Blattfedern durch die Bewegung des Fördergurtes in Förderrichtung gespannt werden.

Bevorzugt kann es außerdem vorgesehen sein, dass die Klingen und/oder die Blattfedern relativ zum Untertrum des Gurtförderers nahezu rechtwinklig angeordnet sind und in Förderrichtung des Straßenbaumaterials betrachtet leicht gebogen sind. Durch diese Anordnung der Klingen bzw. Blattfedern lässt sich das anhaftende Straßenbaumaterial besonders effektiv und leicht von der Oberfläche des Fördergurtes bzw. von dem Untertrum abstreifen. Das Abstreifen des Straßenbaumaterials von dem Fördergurt erfolgt derart an einer Position in der Nähe des Abgabepunktes, sodass das abgestreifte Material in den Vorratsbehälter des Straßenfertigers fällt und für den weiteren Herstellungsprozess des Straßenbelags zur Verfügung steht.

Ein Beschicker zur Lösung der eingangs genannten Aufgabe weist die Merkmale des Anspruch 7 auf. Demnach ist ein Beschicker mit einem Fahrwerk vorgesehen, der wenigstens einen Vorratsbehälter zur Aufnahme von Straßenbaumaterial oder Ähnlichem aufweist sowie mindestens ein einen endlosgemachten Fördergurt aufweisenden Gurtförderer zum Zuführen von Straßenbaumaterial oder ähnlichem aus dem Vorratsbehälter zu einem Straßenfertiger. Diesem Beschicker ist ein Fördergurtabstreifer gemäß einem der Ansprüche 1 bis 6 zuordbar.

Ein Verfahren zur Lösung der eingangs genannten Aufgabe weist die Maßnahmen des Anspruchs 8 auf. Demnach ist es vorgesehen, dass zum Abstreifen des Straßenbaumaterials mehrere Klingen, die über jeweils eine Blattfeder mit einem Träger des Fördergurtabstreifers lösbar verbunden sind, mit einem Untertrum des Gurtförderers in Kontakt gebracht werden. Durch dieses Inkontaktbringen der einzelnen Klingen mit dem Untertrum des Gurtförderers können sich die einzelnen Klingen aufgrund ihrer individuellen Federvorspannung, welche durch die Blattfeder realisiert wird, dem Oberflächenprofil des Untertrums anpassen und somit auf eine besonders effiziente und einfache Art und Weise das angehaftete Straßenbaumaterial vom Untertrum abstreifen.

Des Weiteren kann es erfindungsgemäß vorgesehen sein, dass die einzelnen Klingen des Trägers bei laufendem Gurtförderer federvorgespannt gegen das Untertrum gedrückt werden, insbesondere dass der Träger durch eine lineare Bewegung oder eine Rotationsbewegung relativ zu dem Gurtförderer gegen das Untertrum gedrückt wird. Dadurch, dass sich der Gurtförderer bewegt, während der Träger mit den Klingen an das Untertrum gedrückt wird, werden die Klingen aufgrund der Reibung in Richtung der Förderrichtung bzw. Fertigungsrichtung gebogen, sodass sich die einzelnen Klingen an die Form bzw. das Oberflächenprofil des Untertrums anschmiegen. Dadurch, dass über die Breite des Fördergurtes eine Vielzahl von Klingen angeordnet ist, folgt die Vielzahl der Klingen der Form des Oberflächenprofils des Untertrums. Dadurch kann auf eine schonende Art und Weise das Straßenbaumaterial, welches an dem Untertrum klebt, entfernt werden.

Ein weiteres vorteilhaftes Ausführungsbeispiel der vorliegenden Erfindung kann es vorsehen, dass einzelne Klingen und/oder Blattfedern bei einem festgestellten Verschleiß von dem Träger gelöst und gegen neue Klingen und/oder Blattfedern ausgewechselt werden. Durch dieses verschleißbedingte Auswechseln der Klingen und/oder Federn kann ein kontinuierlicher Betrieb der Straßenbaumaschine gewährleistet werden.

Bevorzugte Ausführungsbeispiele werden im Folgenden anhand der Zeichnung näher beschrieben. In dieser zeigen:
- Fig. 1: einen Beschicker mit einem Fördergurtabstreifer,
- Fig. 2: eine perspektivische Darstellung eines Fördergurtabstreifers,
- Fig. 3: eine Seitenansicht des Fördergurtabstreifers gemäß Fig. 2,
- Fig. 4: eine Sicht auf den Fördergurtabstreifer gemäß Fig. 2, und
- Fig. 5: eine Schnittdarstellung des in Fig. 3 dargestellten Fördergurtabstreifers.

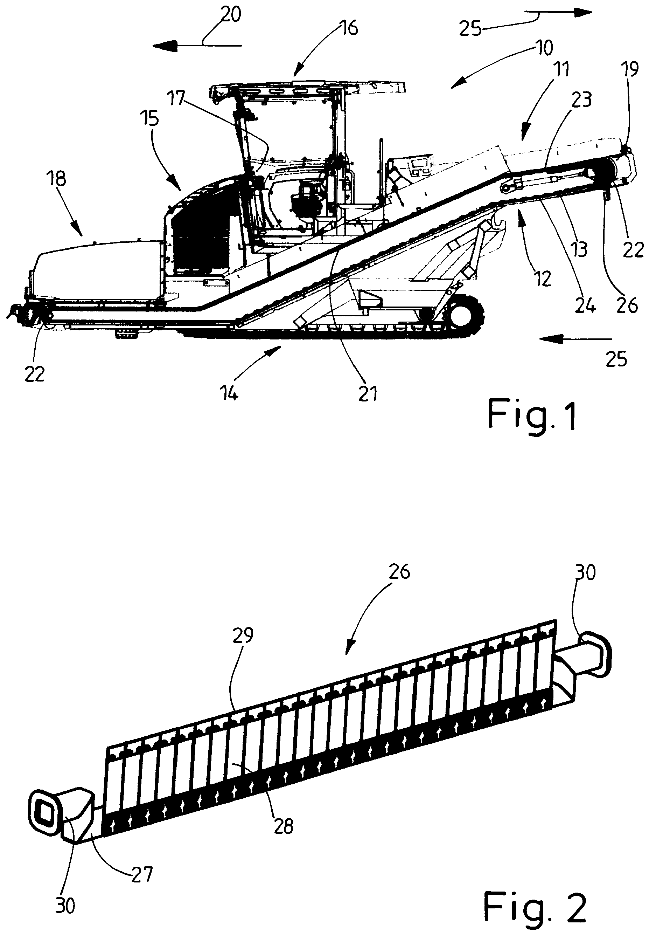

Ein Einbauzug zum Herstellen eines Oberflächenbelags bzw. eines Straßenbelags aus Asphalt umfasst üblicherweise wenigstens einen in der Zeichnung nicht dargestellten Straßenfertiger und wenigstens einen Beschicker 10 (Fig. 1). Der Straßenfertiger dient dazu, ihm zugeführtes Material wie beispielsweise Asphalt, auf den Untergrund aufzubringen, diesen dort mehr oder weniger gleichmäßig zu verteilen und geeignet zu verdichten. Der Straßenfertiger weist an einem vorderen Endbereich einen Vorratsbehälter für Material auf. Diesem Vorratsbehälter wird das Material während des Betriebes des Straßenfertigers sukzessive entnommen und durch das Innere, insbesondere den unteren, bodennahen Bereich des Straßenfertigers in den Bereich der Einbaubohle transportiert.

Das Material wird dem Vorratsbehälter des Straßenfertigers durch den Beschicker 10 zugeführt. Dazu weist der Beschicker 10 einen Förderausleger 11 mit einem sich an diesem entlang erstreckenden Förderer 12, insbesondere einen Gurtförderer 13, auf (Fig. 1). Der Förderausleger 11 ist an einem hinteren Endbereich des Beschickers angelenkt. Zur Höhenverstellung und seitlichen Verstellung kann eine Schwenkvorrichtung vorgesehen sein. Die Schwenkvorrichtung ist automatisch oder durch eine Bedienperson steuerbar, insbesondere verschwenkbar. Damit kann sichergestellt werden, dass das mithilfe des Gurtförderers 13 transportierte Straßenbaumaterial in jedem Fall den Vorratsbehälter des Straßenfertigers trifft. Dazu wird der Förderausleger 11 dem Straßenfertiger beim Verfahren geeignet nachgeführt. Dies ist insbesondere für das gemeinsame Fahren des Straßenfertigers und des Beschickers 10 notwendig.

Zum Verfahren weist der Beschicker 10 ein Fahrwerk 14 auf, das hier als Raupenfahrwerk ausgebildet ist. Als Antrieb für das Fahrwerk 14 und die verschiedenen Einheiten des Beschickers 10 besitzt dieser eine eigene Antriebseinheit 15; typischerweise mit einem Verbrennungsmotor. Zur Steuerung des Beschickers 10, also insbesondere des Fahrwerkes 15, des Gurtförderers 12 und des Förderauslegers 11, ist ein Bedienstand 16 mit Bedienelementen 17 vorgesehen.

Am vorderen Endbereich des Beschickers 10 weist dieser einen Vorratsbehälter 18 auf. In diesem Vorratsbehälter 18 kann ein hier nicht dargestelltes Transportfahrzeug, wie beispielsweise ein Lastkraftwagen, beispielsweise mit einer kippbaren Ladefläche einen Vorrat des Materials schütten. Das Material wird vorzugsweise mit Hilfe eines Förderers, wie beispielweise eines Kratzerförderers, aus dem Vorratsbehälter 18 entnommen. Der Förderer erstreckt sich dazu vom Bereich des Vorratsbehälters 18 bis in den Bereich des Förderauslegers 11. Dort wird das Material auf dem Gurtförderer 12 umgeladen, indem es beispielsweise auf diesen herabfällt. Der Gurtförderer 12 transportiert das Material dann weiter entlang des Förderauslegers 11. An dessen freien Endbereich bzw. an einem Abgabepunkt 19 fällt es von diesem herunter. Aufgrund der Transportgeschwindigkeit des Gurtförderers 12 fällt das Material üblicherweise parallel bzw. bogenförmig entgegen der Fahrtrichtung 20 herunter.

Der Gurtförderer 12 weist zum Transport des Straßenbaumaterials einen Fördergurt 21 auf, der an seinen Endbereichen jeweils eine Umlenktrommel 22 aufweist, von der mindestens eine als Antriebstrommel ausgebildet ist. Der Fördergurt 21 wird außerdem von Rollen bzw. Untertrumtragrollen geführt bzw. stabilisiert. Während das Straßenbaumaterial auf einem Obertrum 23 des Fördergurtes 21 entgegen der Fahrtrichtung 20 befördert wird, bewegt sich ein Untertrum 24 des Fördergurtes in Fahrtrichtung 20. Somit kehrt sich eine Förderrichtung 25 für den Fördergurt 21 relativ zu der Fahrtrichtung 20 um.

Das zu verarbeitende Straßenbaumaterial wird dem Straßenfertiger mit einer hohen Temperatur zugeführt. In diesem heißen Zustand ist das Straßenbaumaterial viskos und weist eine erhöhte Haftkraft auf. Insbesondere an kalten Stellen bleibt das Straßenbaumaterial bevorzugt haften. Aufgrund dessen bleibt beim Fördern des Straßenbaumaterials auf dem Fördergurt 21 des Gurtförderers 13 des Beschickers 10 stets eine geringe Menge an Straßenbaumaterial kleben. Sobald sich eine geringe Menge des Straßenbaumaterials auf dem Fördergurt 21 angesammelt hat, kann dies als "Keim" dienen, für die Ansammlung von weiterem Straßenbaumaterial. Da dies zu einer Beschädigung des Fördergurtes 21 führen kann, muss das anhaftende Straßenbaumaterial regelmäßig von dem Fördergurt 21 entfernt werden. Dazu ist dem in der Fig. 1 dargestelltem Beschicker ein Fördergurtabstreifer 26 zugeordnet.

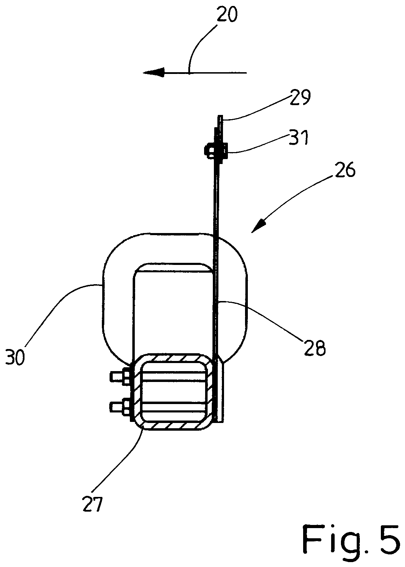

Der Fördergurtabstreifer 26 weist einen Träger 27 auf, der in dem in Fig. 2 dargestellten Ausführungsbeispiel als rechteckiges Hohlprofil ausgebildet ist (s.a. Fig. 5). An diesem Träger 27 ist eine Vielzahl von aneinander angeordneten Blattfedern 28 befestigt. Während die rechteckigen Blattfedern mit einem Ende fest bzw. lösbar mit dem Träger 27 befestigt sind, weisen sie an einem gegenüberliegenden Ende jeweils eine Klinge 29 auf. Diese Klinge ist ebenfalls rechteckig ausgebildet und aus einem harten Material, insbesondere aus Hartmetall, angefertigt. Die Klingen 29 können die gleiche Breite wie Blattfedern aufweisen, oder von dieser abweichen. Die Klingen 29 sind über Befestigungsmittel, beispielsweise Schrauben, an der Blattfeder 28 lösbar verbunden. Die Blattfedern sind bei dem in Fig. 2 dargestelltem Ausführungsbeispiel mit einem geringen Abstand von 1 mm entlang des Träger 27 quer zur Fahrtrichtung 20 angeordnet. Durch die Federwirkung der Blattfedern 28 sind die Klingen 29 in bzw. entgegen der Fahrtrichtung 20 leicht verschwenkbar.

Der Fördergurtabstreifer 26 ist derart ausgebildet, dass er dem Untertrum 24 des Gurtförderers 13 zuordbar ist. Diese Zuordnung kann darin bestehen, dass der Fördergurtabstreifer 26 mit den Endstücken 30 des Trägers 27 in dafür vorgesehen Aufnahmen am Förderer 12 einhängbar sind. Des Weiteren kann es vorgesehen sein, dass diese Aufnahmen bzw. der Träger 27 derart in Richtung des Untertrums 24 verschiebbar bzw. verschwenkbar ist, dass sich der Abstand zwischen den Klingen 29 und dem Untertrum 24 verringert bzw. dass die Klingen 29 mit dem Untertrum 24 in Kontakt kommen.

Für das Heranbewegen bzw. Heranschwenken des Fördergurtabstreifers 26 an das Untertrum 24 ist der Gurtförderer 13 bzw. der Fördergurt 21 in Bewegung zu versetzen. Wenn sodann die Klingen 29 gegen das sich bewegende Untertrum 24 gedrückt werden, werden die Klingen 29 bzw. die Blattfedern 28 in Fahrtrichtung 20 verbogen. Durch dieses mit Federvorspannung an das Untertrum 24 Herandrücken der Klingen 29 passen sich diese den konstruktiven Unebenheiten bzw. dem Oberflächenprofil des Untertrums 24 an. Aufgrund dessen können sich die Klinge 29 in verschiedenen Ebenen relativ zu dem Untertrum 24 bewegen und somit auf eine besonders einfache und effiziente Art und Weise jegliche Straßenbaumaterialreste, welche an dem Untertrum kleben, abstreifen. Die von dem Untertrum 24 abgestriffenen Straßenbaumaterialreste, fallen sodann in den nicht dargestellten Vorratsbehälter des Straßenfertigers.

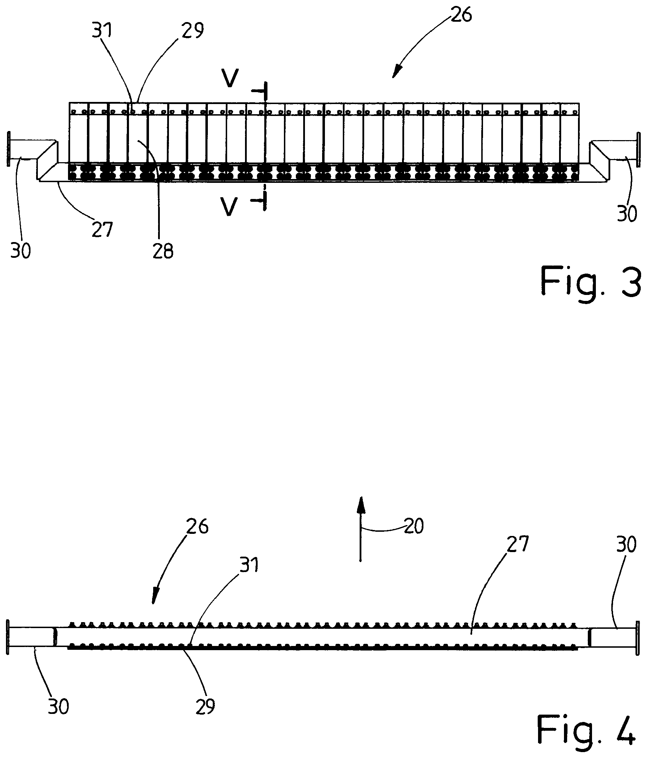

Bei dem in der Fig. 5 dargestellten Schnitt der Fig. 3 wird ersichtlich, dass die Blattfeder 28 nur mit einem Endbereich fest bzw. durch Schrauben, mit dem Träger 27 verbunden ist. Während des Entlangbewegens des Untertrums 24 an der Klinge 29 wird die Blattfeder 28 über den Träger 27 in Fahrtrichtung 20 gebogen.

Die plättchenförmige Klinge 29 wird derart an einem Ende der Blattfedern 28 lösbar durch beispielsweise eine Schraube 31 verbunden, dass die Klinge 29 nur geringfügig über die Blattfeder 28 hinausragt. Durch diese Anordnung der Klinge 29 auf der Blattfeder 28 wird die Klinge 29 durch die Blattfeder 28 gestützt und ein weiterer Verschleiß unterbunden. Des Weiteren kann durch diese relative Positionierung der Klinge 29 auf der Blattfeder 28 die durch das Untertrum 24 auf die Klinge 29 wirkende Druckkraft besser auf die Blattfeder 28 übertragen werden.

Weitere nicht dargestellte Ausführungsbeispiele können es vorsehen, dass die Breite der Blattfedern 28 und der Klingen 29 geringer oder größer als die hier dargestellte ist.

### Bezugszeichenliste:

- 10: Beschicker
- 11: Förderausleger
- 12: Förderer
- 13: Gurtförderer
- 14: Fahrwerk
- 15: Antriebseinheit
- 16: Bedienstand
- 17: Bedienelement
- 18: Vorratsbehälter
- 19: Abgabepunkt
- 20: Fahrtrichtung
- 21: Fördergurt
- 22: Umlenktrommel
- 23: Obertrum
- 24: Untertrum
- 25: Förderrichtung
- 26: Fördergurtabstreifer
- 27: Träger
- 28: Blattfeder
- 29: Klinge
- 30: Endstück
- 31: Schraube

## Patentansprüche

1. Fördergurtabstreifer (26) zum Abstreifen von Straßenbaumaterial von einem Fördergurt (21) eines Gurtförderers (13) einer Straßenbaumaschine, insbesondere eines Beschickers (10) oder einer Straßenfräse, mit einem Abstreifelement, wobei das Abstreifelement an einem Untertrum (24) des Gurtförderers (13) angeordnet ist und sich über die gesamte Breite des Untertrums (24) erstreckt, **dadurch gekennzeichnet, dass** das Abstreifelement einzelne, nebeneinander angeordnete Klingen (29) aufweist, die mit dem Untertrum (24) des Gurtförderers (13) in Kontakt bringbar sind.

2. Fördergurtabstreifer (26) für eine Straßenbaumaschine nach Anspruch 1, **dadurch gekennzeichnet, dass** die einzelnen Klingen (29), bei denen es sich vorzugsweise um Hartmetallklingen handelt, über jeweils eine Blattfeder (28) an einem gemeinsamen Träger (27) befestigt sind, wobei der Träger (27) relativ zum Gurtförderer (13) lösbar befestigt, insbesondere beweglich, ist.

3. Fördergurtabstreifer (26) für eine Straßenbaumaschine nach Anspruch 1 oder 2, **dadurch gekennzeichnet, dass** die einzelnen Klingen (29) lösbar an jeweils einer Blattfeder (28) befestigt sind und/oder die Blattfedern (28) lösbar an dem gemeinsamen Träger (27) befestigt sind.

4. Fördergurtabstreifer (26) für eine Straßenbaumaschine nach einem der vorhergehenden Ansprüche, **dadurch gekennzeichnet, dass** die einzelnen Klingen (29) 2 bis 10 cm, insbesondere 4 bis 5 cm, vorzugsweise 4,8 cm, breit sind und einen gegenseitigen Abstand von 0 bis 0,5 cm, insbesondere 1 mm aufweisen und quer zum Gurtförderer (13) ausgerichtet sind.

5. Fördergurtabstreifer (26) für eine Straßenbaumaschine nach einem der vorhergehenden Ansprüche, **dadurch gekennzeichnet, dass** durch Veränderung des Abstandes des Trägers (27) zum Untertrum (24) des Gurtförderers (13) die Federvorspannung der einzelnen Klingen (29) variierbar ist.

6. Fördergurtabstreifer (26) für eine Straßenbaumaschine nach einem der vorhergehenden Ansprüche, **dadurch gekennzeichnet, dass** die Klingen (29) und/oder die Blattfedern (28) relativ zum Untertrum (24) des Gurtförderers (13) nahezu rechtwinklig angeordnet sind und in Förderrichtung (25) des Straßenbaumaterials betrachtet leicht gebogen sind.

7. Beschicker (10) mit einem Fahrwerk (14), wenigstens einem Vorratsbehälter (18) zur Aufnahme von Straßenbaumaterial oder Ähnlichem und mindestens einem einen endlos gemachten Fördergurt (21) aufweisenden Gurtförderer (13) zum Zuführen von Straßenbaumaterial oder Ähnlichem aus dem Vorratsbehälter (18) zu einem Straßenfertiger oder dergleichen **gekennzeichnet durch** einen Fördergurtabstreifer (26) gemäß einem der Ansprüche 1 bis 6.

8. Verfahren zum Abstreifen von Straßenbaumaterial von einem Fördergurt (21) eines Gurtförderers (13) einer Straßenbaumaschine, insbesondere eines Beschickers (10) oder einer Straßenfräse, mit einem Fördergurtabstreifer (26), wobei der Fördergurtabstreifer (26) an einem Untertrum (24) des Gurtförderers (13) positioniert wird, **dadurch gekennzeichnet, dass** zum Abstreifen des Straßenbaumaterials mehrere Klingen (29), die über jeweils eine Blattfeder (28) mit einem Träger (27) des Fördergurtabstreifers (26) lösbar verbunden sind, mit einem Untertrum (24) des Gurtförderers (13) in Kontakt gebracht werden.

9. Verfahren zum Abstreifen von Straßenbaumaterial von einem Fördergurt (21) nach Anspruch 8, **dadurch gekennzeichnet, dass** die einzelnen Klingen (29) des Trägers (26) bei laufendem Gurtförderer (13) federvorgespannt gegen das Untertrum (24) gedrückt wird, insbesondere dass der Träger (27) durch eine lineare Bewegung oder eine Rotationsbewegung relativ zu dem Gurtförderer (13) gegen das Untertrum (24) gedrückt wird.

10. Verfahren zum Abstreifen von Straßenbaumaterial von einem Fördergurt (21) nach Anspruch 8 oder 9, **dadurch gekennzeichnet, dass** einzelne Klingen (29) und/oder Blattfedern (28) bei einem festgestellten Verschleiß von dem Träger (27) gelöst und gegen neue Klingen (28) und/oder Blattfedern (29) ausgewechselt werden.
